# EUROPÄISCHE PATENTSCHRIFT

(11) **EP 0 355 450 B1**
(45) Veröffentlichungstag und Bekanntmachung des Hinweises auf die Patenterteilung: **08.05.1996**
(21) Anmeldenummer: 89113772.1
(22) Anmeldetag: 26.07.1989
(51) Int. Cl.: D06F 39/04

(54) **Einrichtung zur Steuerung des Warm- und Kaltwasserzulaufs bei Waschmaschinen**
Device for controlling the supply of warm and cold water to washing machines
Dispositif pour commander l'alimentation en eau chaude et froide des machines à laver

(30) Priorität: 25.08.1988 DE 3828813
(43) Veröffentlichungstag der Anmeldung: 28.02.1990
(73) Patentinhaber: AEG Hausgeräte GmbH, D-90429 Nürnberg (DE)
(72) Erfinder: Stamminger, Rainer, Dr. Dipl.-Physiker, D-8560 Lauf (DE); Wipperfürth, Franz-Josef, D-8501 Cadolzburg (DE); Schmidbauer, Waldemar, D-8500 Nürnberg (DE); Henninger, Alfred, D-8532 Ickelheim (DE)

(56) Entgegenhaltungen:
- EP-A- 0 118 167
- DE-A- 2 655 797
- US-A- 4 503 575
- US-A- 4 528 709
- US-A- 4 643 350

## Beschreibung

Verfahren und Einrichtung zur Steuerung des Warm- und Kaltwasserzulaufs bei Waschmaschinen.

Die Erfindung betrifft ein Verfahren zur Steuerung des Warm- und Kaltwasserzulaufs bei Waschmaschinen nach dem Oberbegriff des Anspruchs 1.

Waschmaschinen für den Anschluß an Kalt- und Warmwasser werden immer dann eingesetzt, wenn Warmwasser besonders preiswert zur Verfügung steht. So z. B. bei externer Warmwasserversorgung mit regenerierbaren Energieträgern wie Solaranlagen, Wärmerückgewinnungsanlagen oder Wärmepumpen.

Eine Einrichtung zur Steuerung des Warm- und Kaltwasserzulaufs für Waschmaschinen gemäß dem Oberbegriff des Patentanspruchs 1, jedoch ohne Laugenbehälterheizung, ist aus der Beschreibungseinleitung der EP-A-118 167 bekannt. Bei dieser bekannten Steuerungseinrichtung erhält der Mikroprozessor seine Signale von einem im Waschwasserzulaufbereich angeordneten temperaturabhängigen Fühlorgan. Durch dieses Fühlorgan wird die Temperatur des zulaufenden Warmwassers erfaßt und als 'temperaturabhängiges Signal dem Mikroprozessor zugeführt. Ist das zulaufende Warmwasser zu heiß, wird über den Mikroprozessor das Ventil im Warmwasserzulauf geschlossen und das Ventil im Kaltwasserzulauf geöffnet.

Aus US-A-4 643 350 ist eine Steuereinrichtung mit einem temperaturabhängigen Fühler für das Waschwasser einer Waschmaschine bekannt. Hierbei wird zunächst die Temperatur des zufließenden Warmwassers und mit einer zeitlichen Verzögerung erst die Temperatur des Waschwassers im Laugenbehälter gemessen. Ist die Temperatur des Waschwassers im Laugenbehälter zu hoch, wird über einen Mikroprozessor der Zufluß des Warmwassers gestoppt und der Kaltwasserzufluß freigegeben. Eine weitgehend gleiche Steuereinrichtung für eine Waschmaschine mit Warm- und Kaltwasserzulauf ist Gegenstand der US-A-4 503 575.

Wir nun bei Waschmaschinen mit Warm- und Kaltwasserzulauf, die mit einer solchen bekannten Steuereinrichtung ausgerüstet sind, beispielsweise im Waschprogramm "Kochwäsche" anfangs nur Warmwasser eingeleitet und ist dieses unter Umständen zu heiß, z.B. über 70 Grad Celsius, besteht die Gefahr, daß eiweißhaltige Verschmutzungen im Waschgut, wie beispielsweise Blut, durch die zu hohe Wassertemperatur in das Gewebe eingebrannt anstatt ausgewaschen werden, da das Waschgut durch das zulaufende Heißwasser zu rasch erhitzt worden ist. Der Erfindung liegt deshalb die Aufgabe zugrunde, bei Waschmaschinen der in Rede stehenden Art sicherzustellen, daß auch bei kritischen Anschmutzungen des Waschgutes, beispielsweise mit Eiweiß, ein einwandfreies Auswaschen solcher im Gewebe meist sehr festhaftender Verschmutzungen gewährleistet ist. Diese Aufgabe wird durch die im kennzeichndem Teil des Patentanspruchs 1 gegebene Lehre gelöst. Dadurch, daß die Temperatur des Waschwassers im Laugenbehälter erfaßt und mit im Mikroprozessor abgespeicherten Grenzwerten laufend verglichen wird, kann durch rasch ausführbare Steuerungs- bzw. Schaltungsmaßnahmen die Temperatur des Waschwassers im Laugenbehälter optimiert und immer den jeweiligen Gegebenheiten ohne Zeitverzögerung angepaßt werden.

Im folgenden wird die Erfindung anhand eines Schaltbildes näher erläutert, wobei dieses die installationsmäßige Anordnung und elektrische Verdrahtung der beiden Magnetventile im Warm- und Kaltwasserzulauf sowie der zusätzlichen Laugenbehälterheizung für das Waschwasser zeigt.

Ein Magnetventil 1 steuert den Kaltwasserzulauf K und ein Magnetventil 2 den Warmwasserzulauf W einer Waschmaschine. Im Laugenbottich, dem Mischwasser zufließt, ist ein nicht dargestellter Thermostat angeordnet. Es handelt sich hierbei um einen NTC-Fühler (mit negativem Temperaturkoeffizienten). Dieser NTC-Fühler ändert mit der Mischwassertemperatur kontinuierlich seinen Widerstandswert und liefert somit ein temperaturabhängiges Signal ϑ dessen zeitliche Änderung in einem Mikroprozessor µP erfaßt wird. Der Mikroprozessor µP steuert seinerseits ein Relais 3 mit Umschaltkontakt 4 und ein Relais 6 mit Ausschaltkontakt 6 an. Mit Hilfe des Umschaltkontakts 4 werden wechselseitig die Magnetventile 1 oder 2 an Spannung gelegt und geben entweder kaltes oder warmes Wasser zur Waschmaschine frei. Das Relais 5 schaltet über seinen Ausschaltkontakt 6 die Beheizung 7 der Waschmaschine. Ein Druckwächter 8 schaltet bei Erreichen eines maximalen Wasserniveaus im Laugenbottich beide Magnetventile 1 und 2 ab und unterbricht den kompletten Wasserzufluß zum Gerät. Mit 9 ist ein Hauptschalter bezeichnet, welcher über ein nicht dargestelltes Programmschaltwerk oder ähnliches betätigt wird und die Schaltungsanordnung mit Spannung versorgt. Zu Beginn eines jeden Waschgangs wird dem Gerät grundsätzlich nur Warmwasser zugeführt. Die Beheizung 7 ist eingeschaltet. Dem Mikroprozessor µP sind Grenzwerte bezüglich der zeitlichen Änderung der Warmwasser- oder Mischwassertemperatur eingegeben. Dieser Grenzwert liegt zwischen 1 und 10 Kelvin pro Minute bzw. bevorzugt zwischen 1 und 5 Kelvin pro Minute. Der Grenzwert ist wählbar bzw. abhängig vom eingestellten Waschprogramm, d. h. abhängig von der Wäscheart, der Beladungsmenge und der bereits zugelaufenen Wassermenge. Wird nun der vorgegebene Grenzwert durch zu heißes Wasser überschritten, steuert der Mikroprozessor µP zunächst das Relais 5 an, welches daraufhin über seinen Ausschaltkontakt 6 die Beheizung 7 in der Waschmaschine abschaltet. Ergibt eine nachfolgend vorgenommene Grenzwertüberprüfung immer noch eine Überschreitung, steuert der Mikroprozessor µP das Relais 3 an welches daraufhin über seinen Umschaltkontakt 4 das Magnetventil 2 des Warmwasseranschlußes W schließt und das Magnetventil 1 für den Kaltwasseranschluß K öffnet und nur Kaltwasser zulaufen läßt. Mit Hilfe des Mikroprozessors µP werden also wechselweise entsprechend seinem vorgegebenen Grenzwert bei Über- oder Unterschreitung desselben die Magnetventile 1,2 angesteuert bis der Druckwächter 8 den Füllvorgang beendet. In der Waschmaschine befindet sich also Mischwasser, welches immer genaue, für die jeweilige Wäscheart erforderliche und dem Waschprogramm entsprechende Temperaturen bzw. zeitlich abhängige Temperaturerhöhungen besitzt.

In einer abgewandelten Art der Erfindung können im Warm- und Kaltwasserzulauf W, K zwei zusätzliche Thermostate eingesetzt werden, welche die jeweiligen Zulauftemperaturen messen und an den Mikroprozessor µP weitermelden. Aus diesen Daten wird dann die Ventilansteuerung so abgeleitet, daß die Temperaturerhöhung der Waschlauge optimiert wird.

Vorzugsweise wird mit Hilfe beider Einrichtungen möglichst viel Warmwasser der zentralen Versorgungsanlage entnommen. Der Eigenbedarf des Gerätes ist gering. Eine gute Reinigung von Wäschestücken mit eiweißhaltigen Flecken ist sichergestellt.

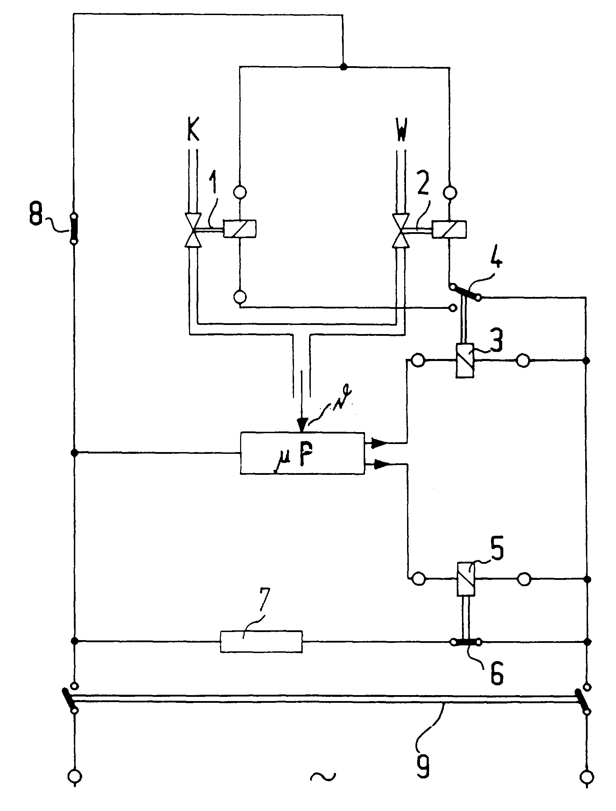

## Patentansprüche

1. Verfahren zur Steuerung des Warm- und Kaltwasserzulaufs (W,K) für Waschmaschinen mit einem Laugenbottich, bei der im Warm- und Kaltwasserzulauf je ein über einen Mikroprozessor (P) gesteuertes Magnetventil (2,1) angeordnet ist und ein temperaturabhängiges Fühlorgan im Laugenbottich zum Erfassen der Waschwassertemperatur vorhanden ist, wobei das Waschwasser im Laugenbottich durch eine in ihm angeordnete Heizung erwärmbar ist, dadurch gekennzeichnet,
**1.1** daß die Heizung während des Zulaufs des Waschwassers eingeschaltet ist.
**1.2** daß durch das temperaturabhängige Fühlorgan die zeitliche Änderung der Temperatur des Waschwassers im Laugenbottich gemessen und als temperaturabhängiges Signal dem Mikroprozessor (P) zugeführt wird,
**1.3** daß dem Mikroprozessor (P) Grenzwerte bezüglich der zeitlichen Änderung der Temperatur des Waschwassers im Laugenbehälter vorgegeben sind, die abhängig vom Waschprogramm, von der Wäscheart, von der Beladungsmenge sowie von der zugelaufenen Wassermenge variierbar anpaßbar sind,
**1.4** daß die im Mikroprozessor abgelegten Grenzwerte mit den vom Waschwasser-Temperaturfühlorgan zugeführten zeitlichen Änderungen der Temperatur verglichen werden,
**1.5** daß bei Überschreiten der vorgegebenen Grenzwerte die Laugenbehälter-Beheizung für das Waschwasser über den Mikroprozessor (P) abgeschaltet wird und daß nach dem Abschalten der Laugenbehälter-Beheizung und bei weiterhin andauernder Grenzwertüberschreitung das Magnetventil (2) im Warmasserzulauf (W) geschlossen und das Magnetventil (1) im Kaltwasserzulauf (K) geöffnet wird.

2. Einrichtung zur Durchführung des Verfahrens nach Anspruch 1, dadurch gekennzeichnet, daß als Fühlorgan für das Waschwasser ein NTC-Fühler dient.

3. Einrichtung zur Durchführung des Verfahrens nach Anspruch 1, dadurch gekennzeichnet, daß die vorgegebenen Grenzwerte zwischen ein und zehn Kelvin, vorzugsweise zwischen ein und fünf Kelvin pro Minute festgelegt sind.

4. Einrichtung zur Durchführung des Verfahrens nach Anspruch 1, dadurch gekennzeichnet, daß im Warm- und Kaltwasserzulauf (W,K) zwei zusätzliche Temperatur-Fühlorgane vorgesehen sind, von welchen die jeweiligen Zulauftemperaturen gemessen und an den Mikroprozessor (P) weitergemeldet werden.

## Claims

1. Method of controlling the hot and cold water supply (W,K) for washing machines having a lye vat, in which a solenoid valve (2, 1) controlled by a microprocessor (P) is disposed both in the hot water inlet and in the cold water inlet and a temperature-dependent sensor element is provided in the lye vat for detecting the washing water temperature, the washing water in the lye vat being heatable by means of a heating system disposed therein, characterized in that
1.1 the heating system is switched on while the washing water is being supplied,
1.2 that by means of the temperature-dependent sensor element the time variation of the temperature of the washing water in the lye vat is measured and supplied as a temperature-dependent signal to the microprocessor (P),
1.3 that limit values relating to the time variation of the temperature of the washing water in the lye tub are entered in the microprocessor (P), which limit values are variably adaptable as a function of the wash program, the type of laundry, the load quantity and the supplied water quantity,
1.4 that the limit values filed in the microprocessor are compared with the time variations of the temperature supplied by the washing water temperature-sensing element,
1.5 that, when the preselected limit values are exceeded, the lye tub heating system for the washing water is disconnected by the microprocessor (P) and that, after disconnection of the lye tub heating system and in the event of the limit value continuing to be exceeded, the solenoid valve (2) in the hot water inlet (W) is closed and the solenoid valve (1) in the cold water inlet (K) is opened.

2. Device for effecting the method according to claim 1, characterized in that an NTC detector is used as a sensor element for the washing water.

3. Device for effecting the method according to claim 1, characterized in that the preselected limit values are fixed between one and ten kelvins, preferably between one and five kelvins, per minute.

4. Device for effecting the method according to claim 1, characterized in that provided in the hot and cold water inlets (W, K) are two additional temperature-sensing elements, by which the respective supply temperatures are measured and relayed to the microprocessor (P).

## Revendications

1. Procédé de commande de l'alimentation en eau chaude et en eau froide (W, K) de machines à laver avec une cuve à lessive, dans l'alimentation en eau chaude et l'alimentation en eau froide desquelles est prévue une vanne magnétique (2, 1), commandée par un microprocesseur (P), et un organe de détection, dépendant de la température, se trouve dans la cuve pour la détection de la température d'eau de lavage, l'eau de lavage pouvant être chauffée dans la cuve par un chauffage placé dans celui-ci, caractérisé
1.1 en ce que le chauffage est enclenché pendant l'arrivée de l'eau de lavage,
1.2 en ce que la variation dans le temps de la température de l'eau de lavage dans la cuve est mesurée par l'organe de détection dépendant de la température et est envoyée au microprocesseur (P), en tant que signal dépendant de la température,
1.3 en ce qu'au microprocesseur (P) sont données des valeurs limites relatives à la variation dans le temps de la température de l'eau de lavage dans la cuve, qui peuvent être adaptées de manière variable en fonction du programme de lavage, du type de linge, de la charge ainsi que de la quantité d'eau alimentée,
1.4 en ce que les valeurs limites inscrites dans le microprocesseur sont comparées aux variations dans le temps de la température, envoyées par l'organe de détection de la température d'eau de lavage,
1.5 en ce qu'en cas de dépassement des valeurs limites données, le chauffage de la cuve pour l'eau de lavage est coupé, par l'intermédiaire du microprocesseur (P) et en ce qu'après coupure du chauffage de la cuve et dans le cas où les valeurs limites continuent d'être dépassées, la vanne magnétique (2) dans l'alimentation en eau chaude (W) est fermée et la vanne magnétique (1) dans l'alimentation en eau froide (K) est ouverte.

2. Dispositif pour la mise en oeuvre du procédé selon la revendication 1, caractérisé en ce qu'on utilise comme organe de détection pour l'eau de lavage, une sonde NTC.

3. Dispositif pour la mise en oeuvre du procédé selon la revendication 1, caractérisé en ce que les valeurs limites données sont fixées entre un et dix Kelvin, de préférence entre un et cinq Kelvin par minute.

4. Dispositif pour la mise en oeuvre du procédé selon la revendication 1, caractérisé en ce que dans l'alimentation en eau chaude et dans l'alimentation en eau froide (W, K) sont prévus deux organes de détection de température supplémentaires, dont les températures d'alimentation respectives sont mesurées et transmises au microprocesseur (P).
